(19) Europäisches Patentamt
European Patent Office
Office européen des brevets

(11) Publication number: **0 544 174 A1**

# (12) EUROPEAN PATENT APPLICATION

(21) Application number: **92119576.4**

(22) Date of filing: **16.11.92**

(51) Int. Cl.5: **G02B 13/14**, G02B 127/00, G02B 27/00, G02B 5/18

(30) Priority: **25.11.91 US 796985**

(43) Date of publication of application: **02.06.93 Bulletin 93/22**

(84) Designated Contracting States: **BE DE ES GB IT**

(71) Applicant: **Hughes Aircraft Company**
**7200 Hughes Terrace, P.O. Box 80028**
**Los Angeles, California 90080-0028(US)**

(72) Inventor: **Chen, Chungte W.**
**33 Allegheny**
**Irvine, California 92720(US)**

(74) Representative: **Patentanwälte Grünecker,**
**Kinkeldey, Stockmair & Partner**
**Maximilianstrasse 58**
**W-8000 München 22 (DE)**

## (54) Optical component employing refractive and diffractive optical elements to obtain a desired Abbe number.

(57) In one embodiment, a refractive-diffractive hybrid telescope 40 having a refracting convex-concave lens 42, a hybrid refractive-diffractive optical element 48 with at least one diffractive surface 52, and a bi-convex lens 24 is provided. In another embodiment, a refractive-diffractive hybrid telescope 80 is disclosed as having a two-lens converter 92 in combination with the binary telescope 40. The two-lens converter 92 has a refracting convex-concave lens 82 and a concave-convex lens 88. The diffracting surface 52 of the hybrid refractive-diffractive optical element 48 preferably has kinoform profiles 112a-d, 112a'-d' or approximated kinoform profiles 122a-d, 122a'-d', 132a-d, and 132a'-d'. Also disclosed is a method for reducing aberration in an optical system. The benefits associated with the present invention include the following: (1) the Abbe number of an optical component employing refractive and diffractive optical elements can be adjusted to a desired value; and (2) hybrid telescopes of the present invention 40 and 80 help simplify telephoto systems and provide comparable or better image quality when compared with conventional refractive telescopes.

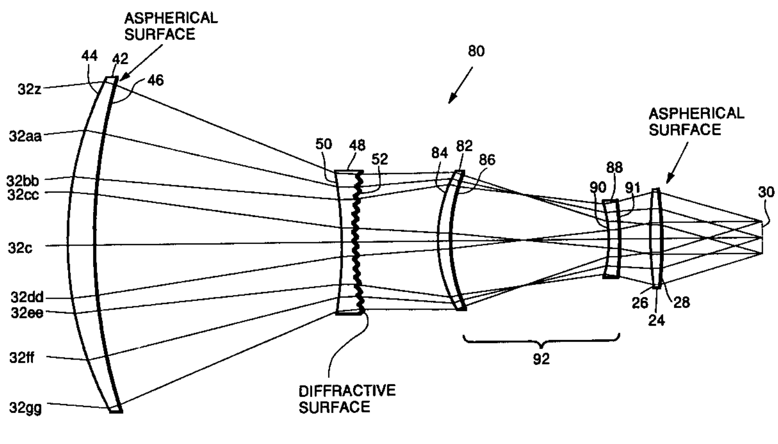


FIG. 4.

EP 0 544 174 A1

## BACKGROUND OF THE INVENTION

### 1. Field of the Invention

This invention relates to the design of optical systems, and more specifically, to a method and apparatus employing refractive and hybrid refractive-diffractive optical elements to obtain a optical system with a desired Abbe number.

### 2. Background of the Invention

High quality optical systems have previously been limited by the finite number of suitable materials for the manufacture of lenses. Associated with each lens manufacturing material is an index of refraction number which is a function of wavelength. Some materials that exhibit useful properties such as a high index of refraction and high dispersion are very expensive and difficult to fabricate. Special glass materials such as LGSK2 and KZFSN4 with abnormal dispersion are typically used for correction of chromatic aberration, but are relatively expensive. Ideally, a designer should have optical element made from relatively inexpensive material having a wide range of refraction indexes and having wide range of dispersion characteristics.

One method of obtaining a high quality optical system is to use a combination of optical materials. The conventional 10X telescope operating in the three to five micrometer spectral range typically has at least three optical elements--a pair of refractive optical elements with a divergent refractive element interposed between them. The second divergent optical element is often made of calcium fluoride, $CaF_2$, which is used mainly to reduce axial chromatic aberration, lateral chromatic aberration, and field curvature. Unfortunately, lenses made of calcium fluoride are expensive and difficult to fabricate. There is no other material that effectively substitutes for calcium fluoride, which is uncommon due to its extremely dispersive nature. In addition, the first and third optical elements in a conventional 10X telescope typically have aspherical surfaces. Large aspherical surfaces are more expensive to manufacture than spherical surfaces and add significant cost to the price of the optical system.

What is needed is an optical element which increases the number of properties to include a wide variety of dispersive properties.

Furthermore, what is needed is an optical element which allows correction of axial chromatic aberration, lateral chromatic aberration, and field curvature without introducing higher order aberrations.

In addition, what is needed is an optical element that will replace expensive optical elements made of limited and exotic materials.

## SUMMARY OF THE INVENTION

Disclosed is a method and apparatus for an optical component employing refractive and diffractive optical elements, also called hybrid optical elements, to obtain a desired Abbe number which provides correction of optical aberrations. Correction of optical aberration is typically accomplished by using a negative lens fabricated from a dispersive material. A commonly used quantity that describes the relative dispersive properties is the Abbe number. The Abbe number of calcium fluoride at the 3 to 5 micrometer spectral band is 21.8, which indicates that calcium fluoride is an extremely dispersive material and is useful to help correct optical aberrations.

The Abbe numbers of a conventional refractive optical element and a diffractive optical element designed according to the present invention are different. Usually, the Abbe number of a refractive optical element is positive, but the Abbe number of a diffractive optical element is negative and inversely proportional to the operating spectral bandwidth. It is important to note that the combination of refractive and diffractive optical elements is capable of a wide variety of Abbe numbers regardless of the material used in fabrication because the dispersion is due to diffraction and not refraction. The combination of refractive and diffractive optical elements yields an optical system having an Abbe number of the desired value. Unlike the conventional lens systems, the use of hybrid optical elements will not introduce any significant amount of third order and higher order aberrations.

The method disclosed in this application involves the procedure necessary to design an optical system with refractive and hybrid refractive-diffractive optical elements having a desirable Abbe number. The Abbe number of the optical system can be controlled by selecting and combining the individual Abbe numbers for the refractive and diffractive optical elements. The Abbe number for refractive materials is defined as:

(1)
$$V_1 = \frac{n_1 - 1}{n_2 - n_3}$$

where $n_1$, $n_2$ and $n_3$ are the indexes of material at three different wavelengths $\lambda_2 < \lambda_1 < \lambda_3$. Generally, the Abbe number is positive for a refractive component.

The Abbe number for a diffractive surface is defined as:

(2)
$$V_2 = \frac{\lambda_1}{\lambda_2 - \lambda_3}$$

where $\lambda_2 < \lambda_1 < \lambda_3$. The Abbe number for a diffractive optical component is negative and is inversely proportional to the operating spectral band width.

Similarly, the Abbe number of an optical system such as a cemented doublet is defined as:

(3)
$$V_3 = \frac{k_3}{\frac{k_1}{V_1} + \frac{k_2}{V_2}}$$

where $V_1$ and $V_2$, and $V_3$ are the Abbe numbers of the refractive optical element, diffractive optical element, and the doublet, respectively and $k_1$, $k_2$ and $k_3$ are the optical powers of the refractive optical element, diffractive optical element and the doublet, respectively. The Abbe number of a conventional achromatic doublet can reach infinity because the denominator of equation 3 can equal zero. Any attempt to vary the optical-power-to-Abbe-number ratio of each individual elements in order to control the denominator of equation 3 will often introduce a significant amount of third order and higher order aberrations. Due to these reasons, the optical power and F-numbers of conventional achromatic doublets are limited. In addition, cost and complexity are added to high quality image systems operating over a broad spectral band. In sharp contrast, proper distribution of optical power and Abbe numbers between the refractive and diffractive optical components will yield an Abbe number for a doublet suitable for correction axial chromatic aberration. For example, if a doublet with an optical power of -1 (unity) and an Abbe number ($V_3$) of 10 is needed for a telephoto lens system, which operates in the spectral band from the hydrogen C-line ($\lambda_3$ = 0.65627 micrometers) to the hydrogen F-line ($\lambda_1$ = 0.48613 micrometers) and further defining the helium D-line ($\lambda_2$ = 0.58756 micrometers), then the following conventional doublet and doublet designed according to the present invention will satisfy the initial requirements. The convention doublet, a F2-BK7 doublet for example, would have $k_1$ = -7.097, $k_2$ = 6.097, $V_1$ = 36.4, and $V_2$ = 64.2, thereby yielding a conventional doublet with an optical power of -1 and an Abbe number ($V_3$) of 10. In contrast a doublet employing a diffractive optical element, a F2 - hybrid doublet for example, could have $k_1$ = 1.229, $k_2$ = 0.229, $V_1$ = 36.4 and $V_2$ = -3.453, thereby yielding a F2-diffractive doublet with an optical power of -1 and an Abbe number ($V_3$) of 10. A comparison shows that each element of the conventional doublet carries a greater amount of optical power, $k_1$ and $k_2$. This introduces a greater amount of optical aberrations into the conventional system. On the other hand, the F2-diffractive doublet contains elements having smaller optical power, $k_1$ and $k_2$, and therefore introduces a much smaller amount of optical aberrations into the system.

Also disclosed is a binary 10X telescope designed using aforementioned method and having a first refracting element, a second hybrid refractive-diffractive optical element and a third refractive optical element. This preferred embodiment provides image quality comparable to a conventional 10X telescope. Advantages of the present invention also include a zinc sulphide diffractive element which replaces the expensive calcium fluoride element of the conventional 10X telescope. In addition, the large aspherical silicon surface used on the first element in a conventional 10X telescope is replaced by a optical element having spherical surfaces.

A second embodiment is a binary 3.3X telescope constructed from the binary 10X telescope of the present invention. In this embodiment a two-lens converter functions to convert the 10X telescope into a 3.3X telescope.

The method and apparatus of the present invention help simplify optical system and help improve image quality.

Furthermore, requirements for improved telescopes and imagers operating over broad spectral bands can be met.

Additional objects, advantages and features of the present invention will become apparent from the following descriptions and appended claims, taken in conjunction with the accompanying drawings.

## BRIEF DESCRIPTION OF THE DRAWINGS

FIG. 1 is a conventional 10X telescope using only refractive optical elements, which may be found in the prior art;

FIG. 2 is a 10X refractive-diffractive hybrid telescope utilizing both refractive and hybrid refractive-diffractive optical elements in accordance with the first embodiment of this invention;

FIG. 3 is a conventional 3.3X telescope using only refractive optical elements, which may be found in the prior art;

FIG. 4 is a 3.3X refractive-diffractive hybrid telescope employing both refractive and hybrid refractive-diffractive optical elements in accordance with another embodiment of this invention;

FIG. 5 is a diagram illustrating the method of obtaining a desirable Abbe number in accordance with this invention;

FIG. 6a is an enlarged cross-sectional view of a Fresnel phase plate with a positive optical power having a kinoform diffractive surface and showing the microscopic details thereof;

FIGS. 6b and 6c are enlarged cross-sectional views of a binary optical element with a positive optical power having surfaces which approximate the kinoform diffractive surface and showing the microscopic details thereof;

FIG. 7a is an enlarged cross-sectional view of a Fresnel phase plate with a negative optical power having a kinoform diffractive surface and showing the microscopic details thereof;

FIGS. 7b and 7c are enlarged cross-sectional views of a binary optical element with a negative optical power having surfaces which approximate the kinoform diffractive surface and showing the microscopic details thereof; and

FIG. 8 is a front view of the Fresnel phase plate showing the concentric relationship of the diffractive rings.

## DETAILED DESCRIPTION OF THE PREFERRED EMBODIMENTS

It should be understood that the following description of the preferred embodiments are merely exemplary in nature and are in no way intended to limit the invention or its application or uses.

FIG. 1 shows a conventional 10X telescope 10. Rays 32a-i symbolically represent light passing through the optical system and function as a fundamental lens design tool, called analytical ray tracing. One skilled in the art would understand that the rays 32a-i are sequentially traced through a series of refracting surfaces and produce a measurement of the performance of the lens system. The principal ray 32e defines the optical axis of the lens system. Principal ray 32e passes through the lenses unrefracted since its angle of incidence at each lens surface is zero degrees. It is important to note that the optical axis does not necessarily have to be straight and may be bent if the principal ray 32e is reflected or refracted at an angle. However, for purposes of illustration the principal ray 32e is not deviated. Rays 32a-i enter the conventional 10X telescope 10 through the refracting optical element 12, which has a convex refracting surface 14 and a concave refracting aspherical surface 16. Optical element 12 is used to focus the object of interest in the field onto a plane (not shown) behind the negative lens element 18. The aspherical surface 16 is used mainly to correct spherical aberration. The combination of the positive lens element 12 and the negative lens element 18 form a lens system with an effective focal length longer than the separation of the two lenses. Optical element 18 which has concave refracting surfaces 20 and 22 is typically composed of calcium fluoride, $CaF_2$, which is used for its strong dispersive qualities.

The third optical element 24 has a convex spherical surface 26 and a convex aspherical surface 28. The exit pupil 30 defines the appropriate area for an observer, a photographic system, or sensor system, which are not shown, to view or sense an image.

FIG. 2 shows a 10X refractive-diffractive hybrid telescope 40 of the present invention. Rays 32j-q enter the telescope 40 through optical element 42 which has a spherical convex surface 44 and a spherical concave surface 46. Optical element 42 can be made of common optical material such as silicon. Optical element 42 differs from optical element 12 used in the conventional 10X telescope 10. Surfaces 44 and 46 of the binary telescope 40 are spherical whereas surface 16 of the conventional telescope 10 is aspherical. The spherical surfaces 44 and 46 are generally simpler and less expensive to manufacture. While this embodiment of the present invention uses spherical surfaces, the use of aspherical surfaces is not precluded and may be advantageous in some applications. Hybrid refractive-diffractive optical element 48 has a concave refracting surface 50 and a diffractive surface 52. Hybrid refractive-diffractive optical element 48 may be formed from zinc sulfide, ZnS. Zinc sulfide is one of the relatively inexpensive materials that may be used. The diffractive surface 52 may be etched or otherwise formed onto the material and take the form of a binary grating or a kinoform surface. Optical element 48 has a strong dispersive property, indicated by a small Abbe number, and is an effective substitute for the calcium fluoride optical element 18 utilized in a conventional 10X telescope 10. In comparing with the optical element 18 in Figure 1 with the hybrid refractive-diffractive optical element 48, the hybrid refractive-diffractive optical element 48 is much more effective in reducing longitudinal chromatic aberration for the overall system due to its flexibility in fine-tuning its Abbe-number. Once the longitudinal chromatic aberration is corrected, any pupil shift will not introduce additional lateral chromatic aberration. For this reason, the entrance pupil (not shown) can be arranged very close to the first lens element 42. Consequently, the aperture (not shown) of the first lens element 42 can be smaller.

The third optical element 24 of the 10X telescope 40 employs spherical convex surface 26 and an aspherical convex surface 28. The exit pupil 30 defines the appropriate area for an observer, a photographic system, or sensor system, which are not shown, to view or sense an image. It is important to note that this invention is not limited to a 10X magnification telescope, but is applicable to any suitable magnification.

FIG. 3 shows a conventional 3.3X telescope 60 with a two lens converter 74 and having rays 32r-y. The two-lens converter 74 having optical elements 62 and 68 is inserted into the same lens system of the conventional 10X telescope 10. Optical element 62 has a convex refracting surface 64 and a concave refracting surface 66. Optical element 68 is composed of germanium, Ge, and has a concave refracting surface 70 and a convex refracting surface 72.

FIG. 4 shows a 3.3X refractive-diffractive hybrid telescope 80 of the present invention having rays 32z, 32aa-32gg. Telescope 80 is constructed from the 10X telescope 40 by inserting a two-lens converter 92 having optical elements 82 and 88. Optical element 82 has a convex refracting surface 84 and a concave refracting surface 86 and may be made of common optical lens material such as silicon. Optical element 88 has a concave refracting surface 90 and a convex refracting surface 92. Furthermore, optical element 88 has the advantage of a simple composition like silicon, whereas the counterpart optical element 68 used in the conventional 3.3X telescope 60 is typically made of germanium.

FIG. 5 shows a diagram 100 having steps 102 through 106, which describe a method of reducing aberration in an optical system by providing a combination of refractive and diffractive optical elements in order to obtain a resulting Abbe number. Step 102 provides at least one refractive optical element having a preselected first Abbe number. Step 104 requires that at least one diffractive optical element having a preselected second Abbe number defined by Eq. 2 be provided. Step 106 provides for the combining, optically arranging, or otherwise putting into functional relationship of the lenses and results in an Abbe number for the combined lenses.

FIGS. 6a, 7a, and 8 show the microscopic detail of the diffractive surfaces 44 and 70 of the previous embodiments. The Fresnel phase plate with a positive optical power 110 and the Fresnel phase plate with a negative optical power 110' have several concentric rings which are shown to have the kinoform phase profiles 112a-d and 112 a'-d'. The kinoform Fresnel phase plates 110 and 110' may be used in the present invention because the plates have a very high diffraction efficiency. The height dimension 114 is the distance between the highest point 116 or 116' and the lowest point 118 or 118'of the kinoform phase profiles 112a-d and 112a'-d'. In the present invention, the height difference 114 is equal to $\lambda/(n-1)$ where $\lambda$ is the average wavelength of the operating spectral band and n is the index of refraction of the Fresnel phase plates 110 and 110'. The height dimension 114 creates an optical path difference of one wave. The kinoform Fresnel plate has the advantage of theoretical perfect diffraction efficiency. FIG. 8 illustrates the concentric nature of the kinoform phase profiles 112a-d of the Fresnel phase plate 110.

FIGS. 6b, 6c, 7b, and 7c illustrate that the kinoform Fresnel phase plates 110 and 110' can be approximated by binary Fresnel zone plates 120, 120', 130, and 130' (also called binary gratings), each having a multitude of concentric rings 122a-d, 122a'-d', 132a-d, and 132a'-d'. The binary Fresnel zone plates 120 and 120' have four levels 124a-d and 124a'-d'. Whereas the binary Fresnel zone plates 130 and

130' have eight levels 134a-h and 134a'-h'. It is important to note that the number of levels increases the theoretical diffraction efficiency. The theoretical diffraction efficiency of the Fresnel phase plate 110 is 100 percent and the theoretical diffraction efficiency for a 16 level binary Fresnel zone plate (not shown) approaches 99.0 percent. The binary Fresnel zone plate with a 16 levels provides a good balance between diffraction efficiency and ability to manufacture. However, the present invention is not limited to a Fresnel phase plate or a binary grating and may be used with any optical element providing diffraction. The binary Fresnel zone plate of the kinoform-type surface has been disclosed by Swanson and Veldcamp in "Infrared Application of Diffractive Optical Elements," SPIE Proceeding, Vol. 815, paper #22, 1988, which is hereby incorporated by reference.

Benefits associated with this novel invention can be summarized as follows:

(1) The Abbe number of an optical component employing refractive and diffractive optical elements can be adjusted to a desired value without the hybrid refractive-diffractive optical components introducing any significant additional amount of third and higher order aberrations compared to a conventional refractive optical element;

(2) The hybrid telescopes of the present invention help simplify telephoto systems and provide comparable or better image quality compared to a conventional refractive telescope; and

(3) The optical components employing refractive and diffractive elements according to the present invention have comparable or better lateral color correction as a result of comparable or better axial color correction.

## Claims

**1.** A method for reducing aberration in an optical system, said method comprising:

providing at least one refractive optical element having a preselected first Abbe number;

providing at least one diffractive optical element having a preselected second Abbe number; and

combining said refractive optical element and said diffractive optical element to form a refractive-diffractive optical system having a resulting Abbe number, with said resulting Abbe number indicating that the refractive-diffractive optical system provides correction of axial chromatic aberration.

**2.** The method of Claim 1 wherein first Abbe number is defined as

$$V_1 = \frac{n_1 - 1}{n_2 - n_3}$$

where $n_1$, $n_2$ and $n_3$ are the indexes of material at three different wavelengths $\lambda_2 < \lambda_1 < \lambda_3$.

**3.** The method of Claim 1 wherein the second Abbe number is defined as

$$V_2 = \frac{\lambda_1}{\lambda_2 - \lambda_3}$$

where $\lambda_2 < \lambda_1 < \lambda_3$ are three different wavelengths.

**4.** The method of Claim 1 wherein the refractive-diffractive optical system is a doublet and the resulting Abbe number being defined as

$$V_3 = \frac{k_3}{\frac{k_1}{V_1} + \frac{k_2}{V_2}}$$

where $V_1$, $V_2$, and $V_3$ are the Abbe numbers of the refractive optical element, the diffractive optical element, and the doublet, respectively and $k_1$, $k_2$ and $k_3$ are the optical powers of the refractive optical

element, the diffractive optical element, and the doublet, respectively.

**5.** The method of Claim 1 wherein a first, second, and third optical elements are provided and said first optical element is a refracting convex-concave lens, said second optical element has at least one diffractive surface and said third optical element is a refracting bi-convex lens.

**6.** A refractive-diffractive hybrid telescope comprising:
a first refracting element having first and second surfaces, the first surface being a refracting convex surface and the second surface being a refracting concave surface;
a second element having third and fourth surfaces, the third surface being a refractive concave surface and the fourth surface being a diffractive surface; and
a third element having fifth and sixth surfaces which are refracting convex surfaces.

**7.** The binary telescope of Claim 6 , wherein the fourth surface is a binary grating.

**8.** The binary telescope of Claim 6 , wherein the fourth surface is a binary grating having a plurality of concentric rings, each ring having a series of phase level steps for approximating a kinoform profile.

**9.** The binary telescope of Claim 6, further comprising a two-lens converter, said two-lens converter having a refracting convex-concave lens and a refracting concavo-convex lens.

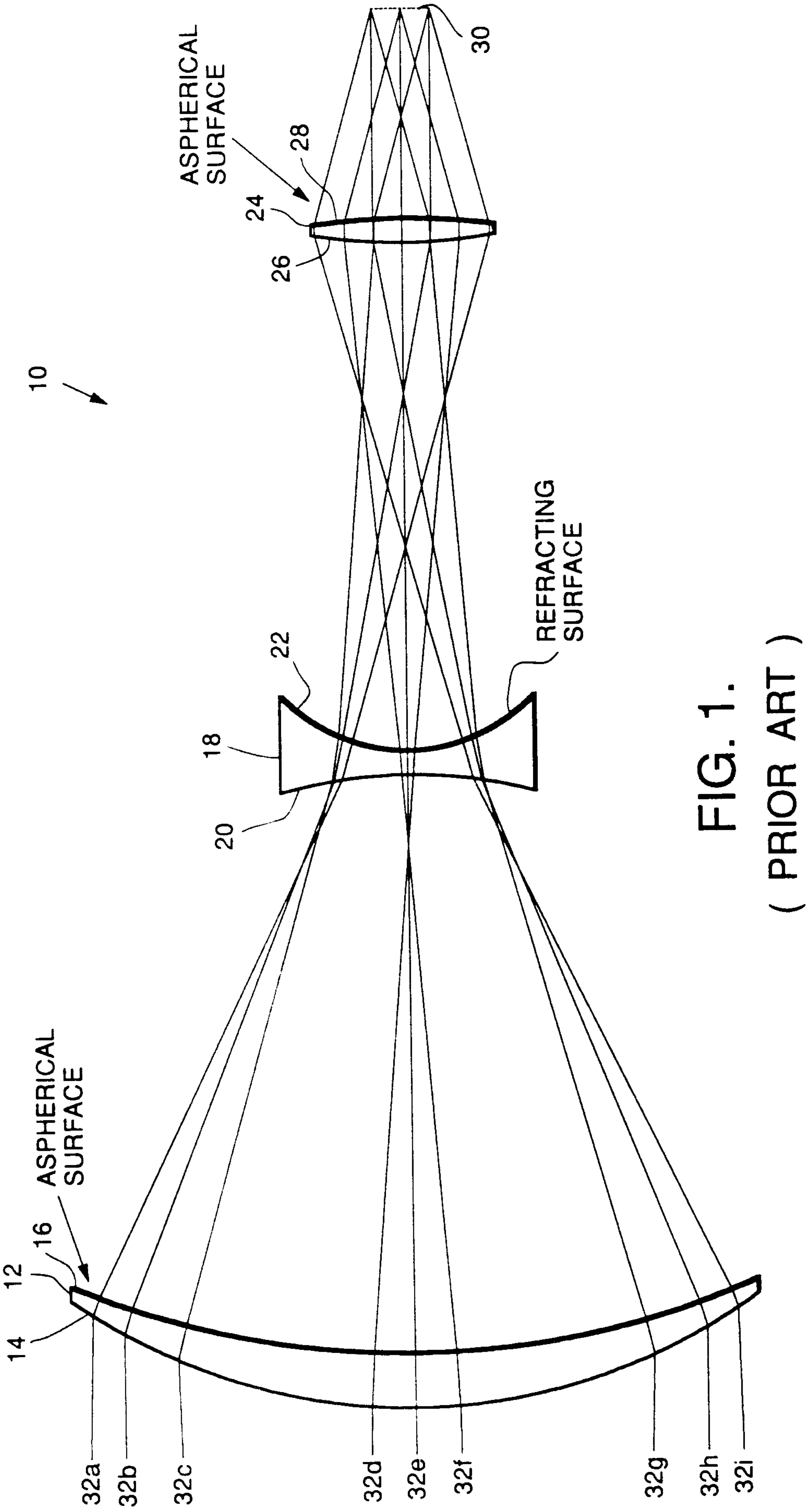


FIG. 1.
( PRIOR ART )

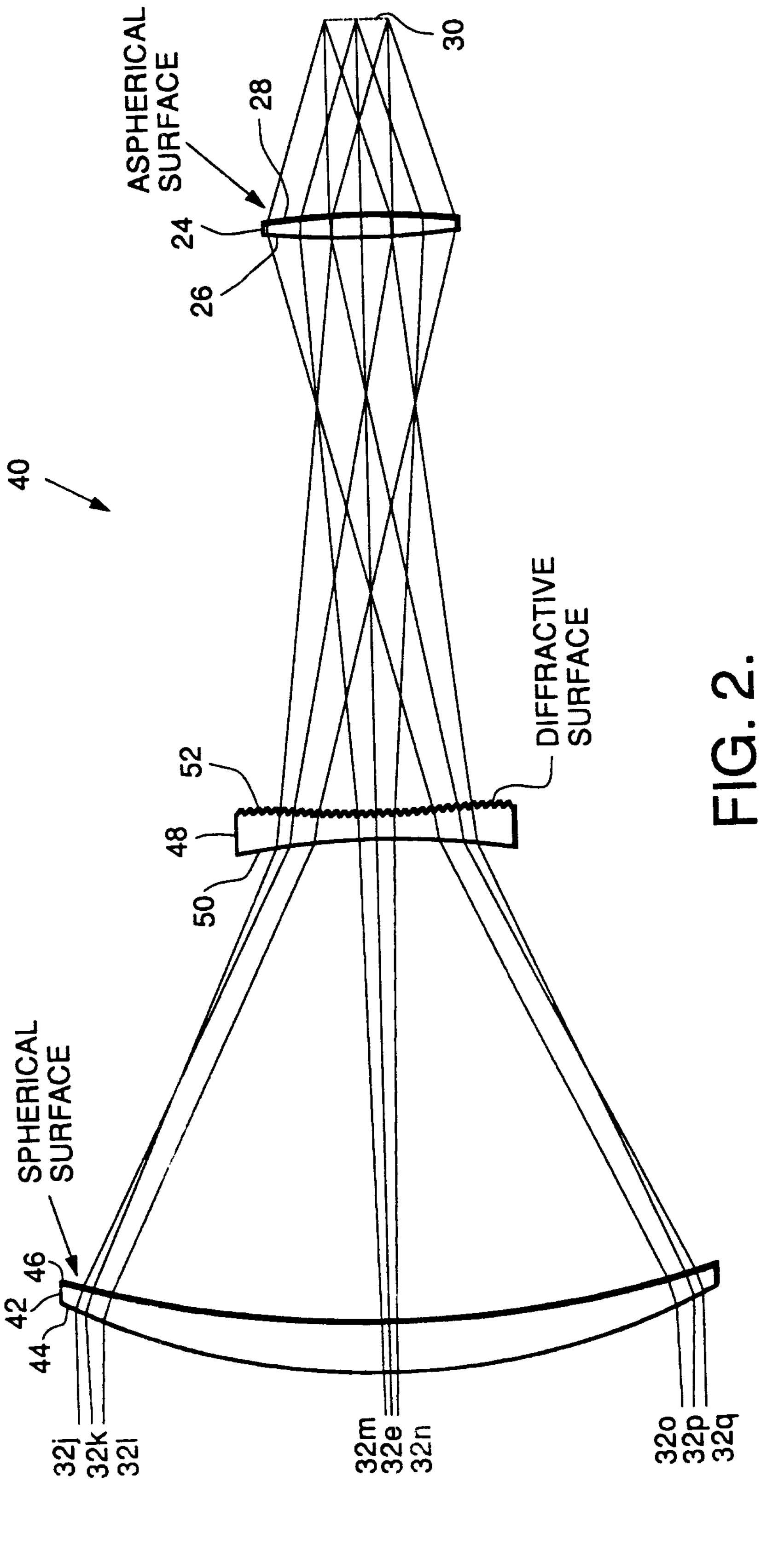
ASPHERICAL SURFACE
28
30
24
26
40
DIFFRACTIVE SURFACE
52
48
50
SPHERICAL SURFACE
46
42
44
32j
32k
32l
32m
32e
32n
32o
32p
32q

FIG. 2.

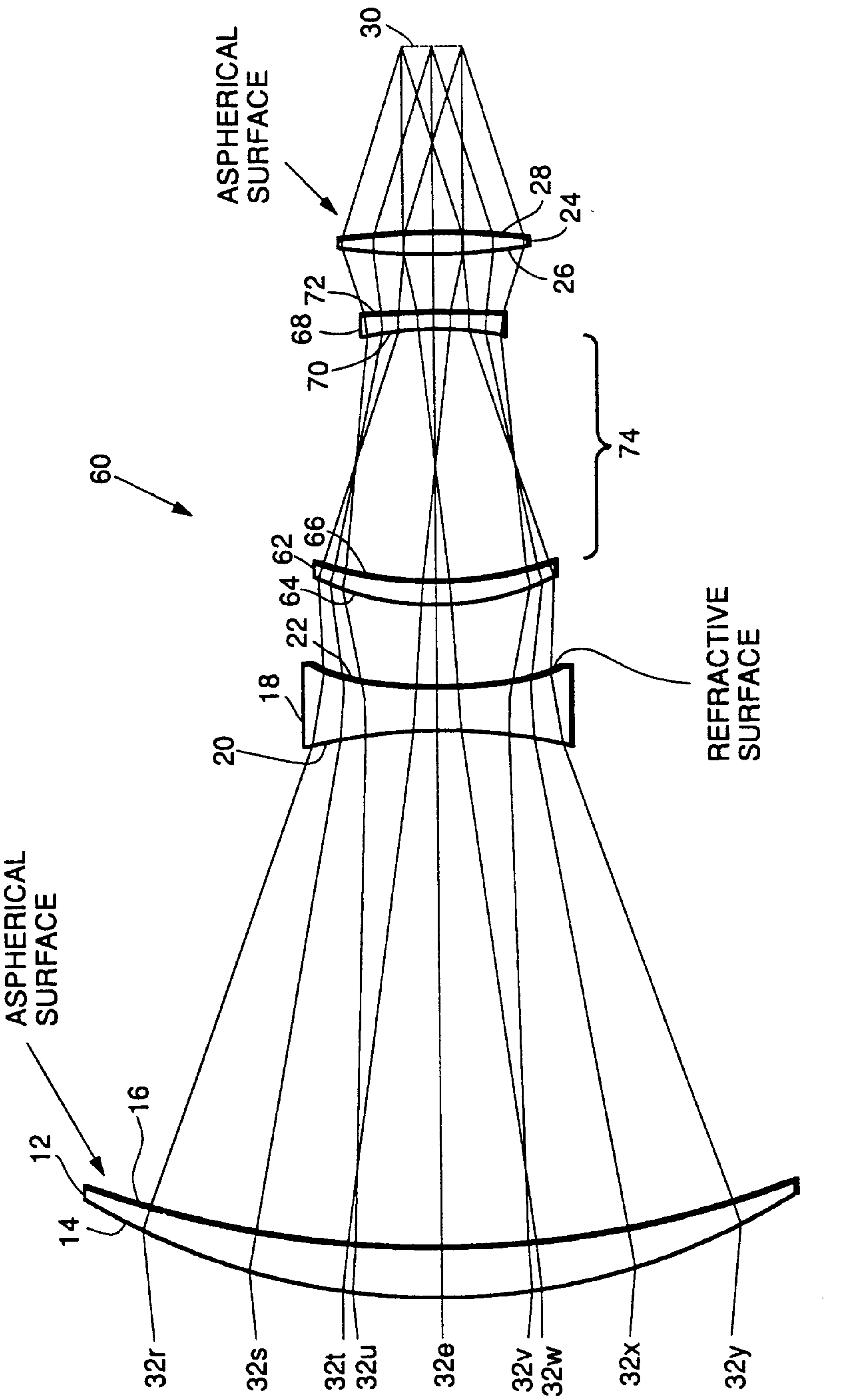


FIG. 3.
( PRIOR ART )

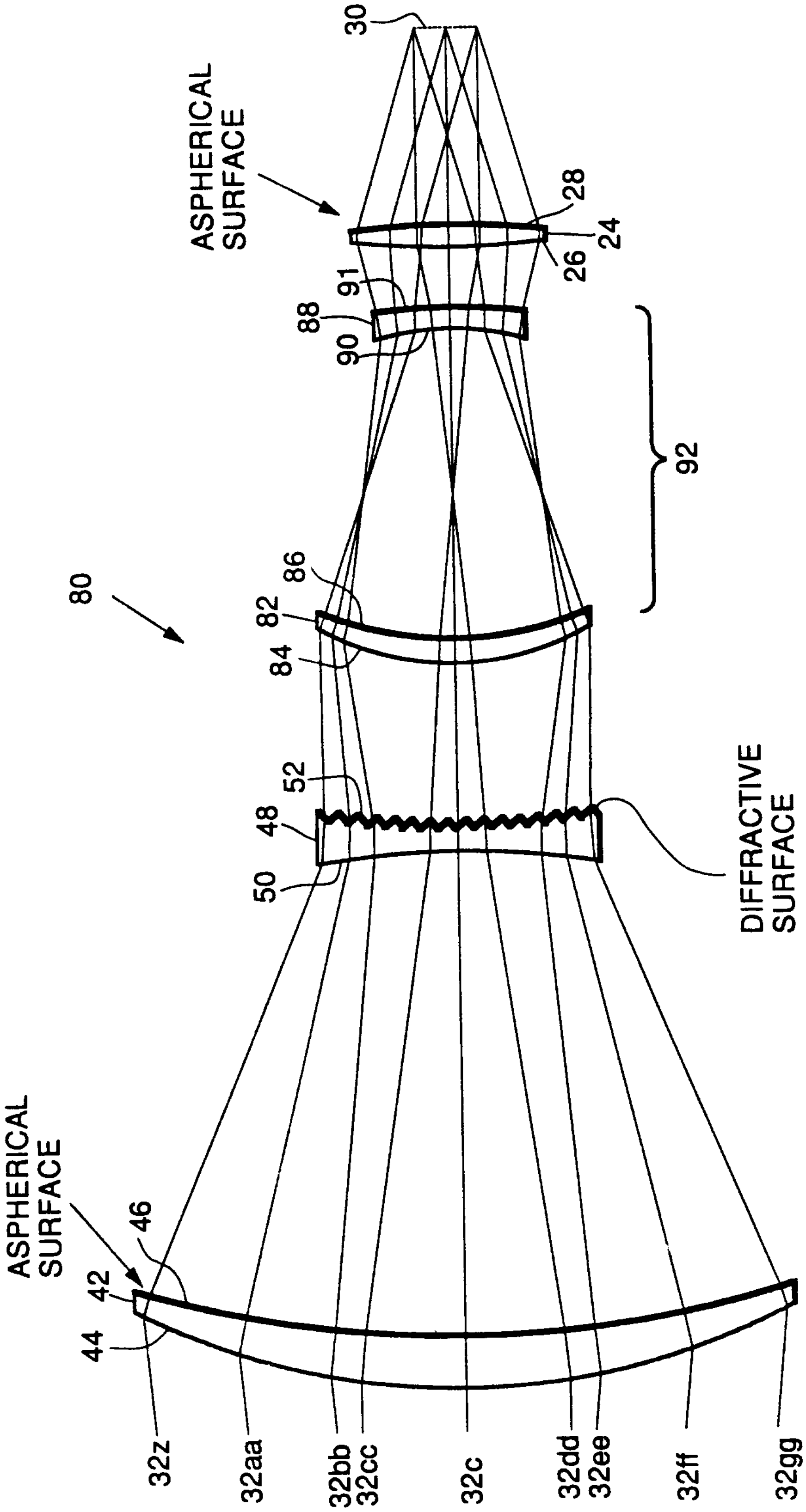
30
ASPHERICAL SURFACE
28
24
26
91
88
90
92
80
86
82
84
52
48
50
DIFFRACTIVE SURFACE
ASPHERICAL SURFACE
46
42
44
32z
32aa
32bb
32cc
32c
32dd
32ee
32ff
32gg

FIG. 4.

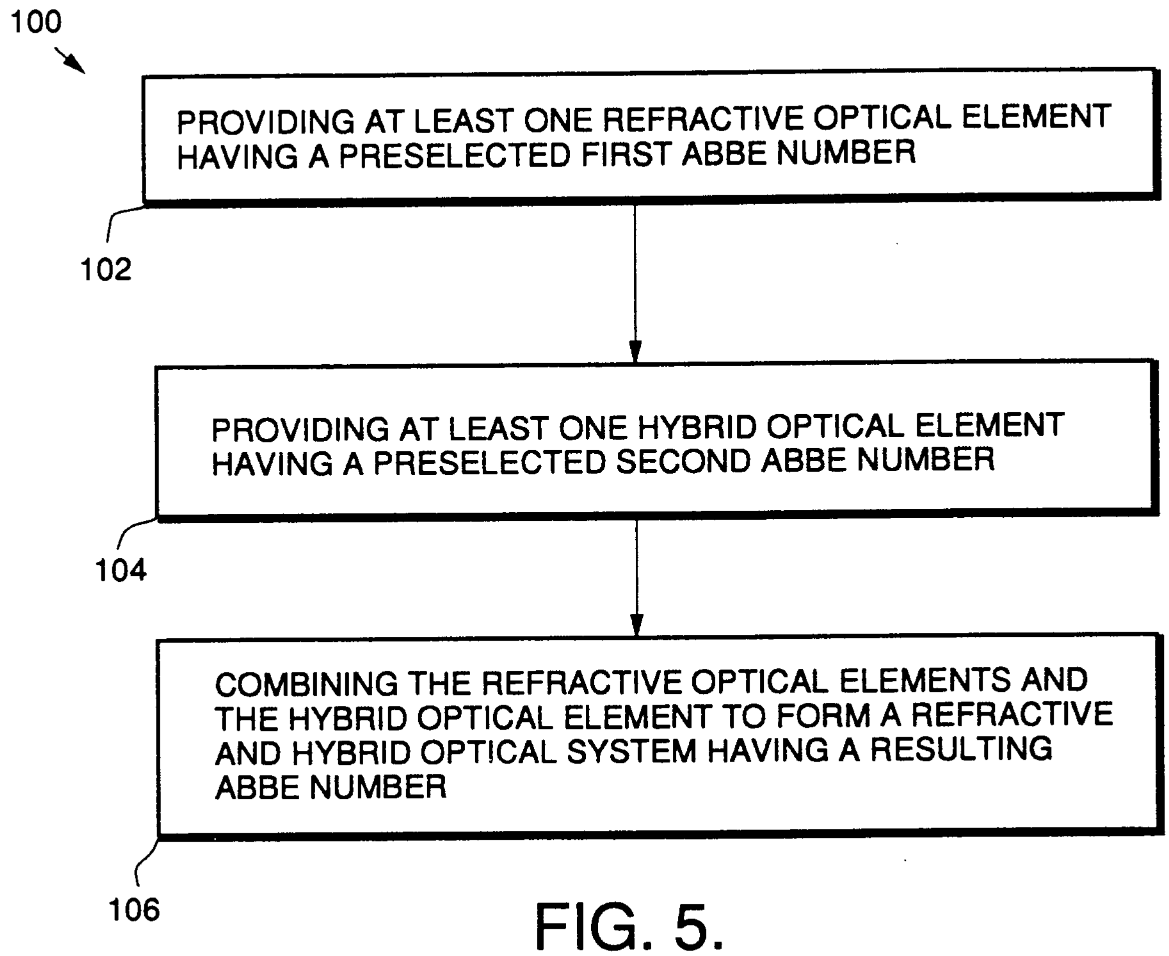
100
PROVIDING AT LEAST ONE REFRACTIVE OPTICAL ELEMENT HAVING A PRESELECTED FIRST ABBE NUMBER
102
PROVIDING AT LEAST ONE HYBRID OPTICAL ELEMENT HAVING A PRESELECTED SECOND ABBE NUMBER
104
COMBINING THE REFRACTIVE OPTICAL ELEMENTS AND THE HYBRID OPTICAL ELEMENT TO FORM A REFRACTIVE AND HYBRID OPTICAL SYSTEM HAVING A RESULTING ABBE NUMBER
106

FIG. 5.

FIG. 8.

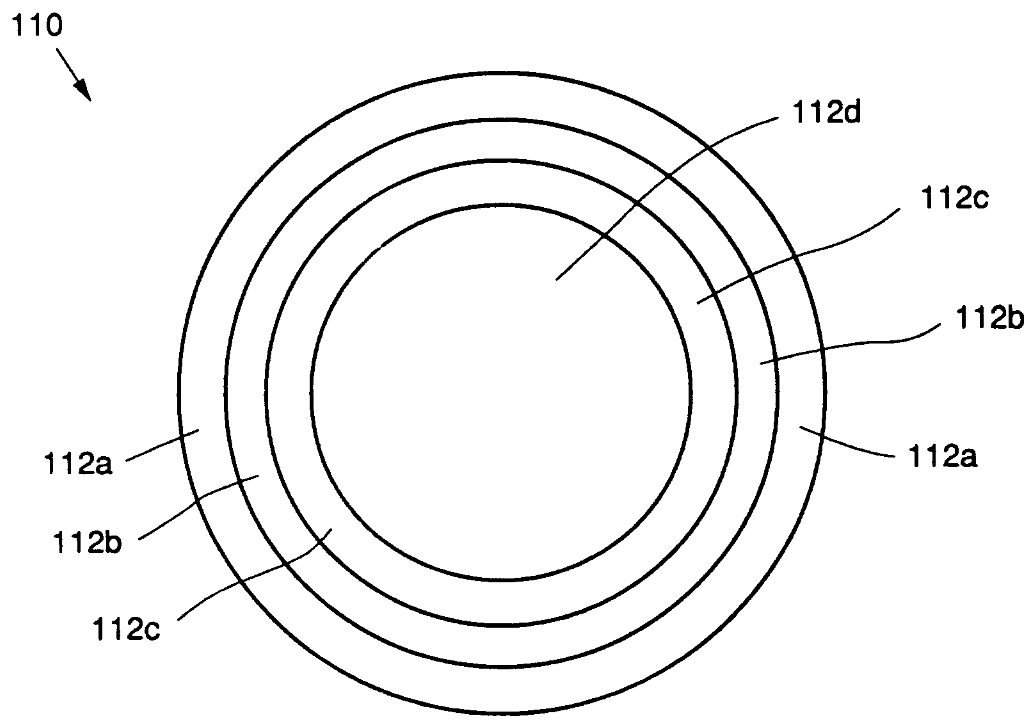
110
112d
112c
112b
112a
112a
112b
112c

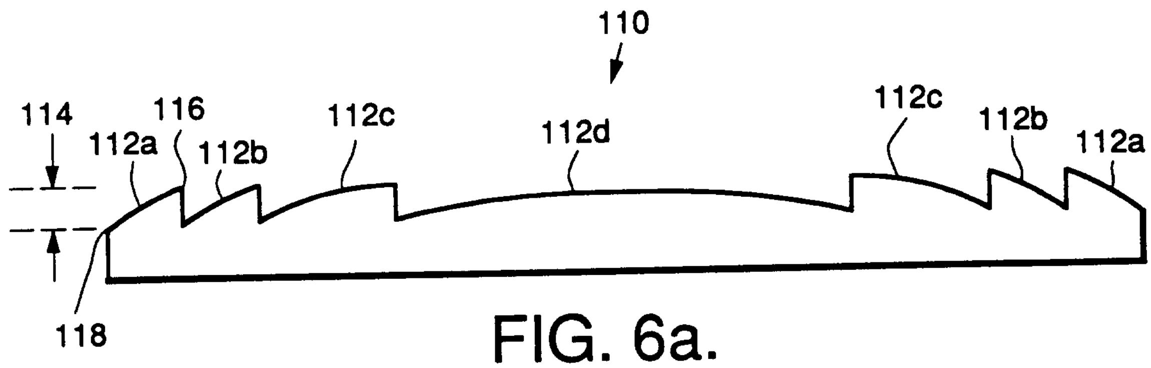


FIG. 6a.

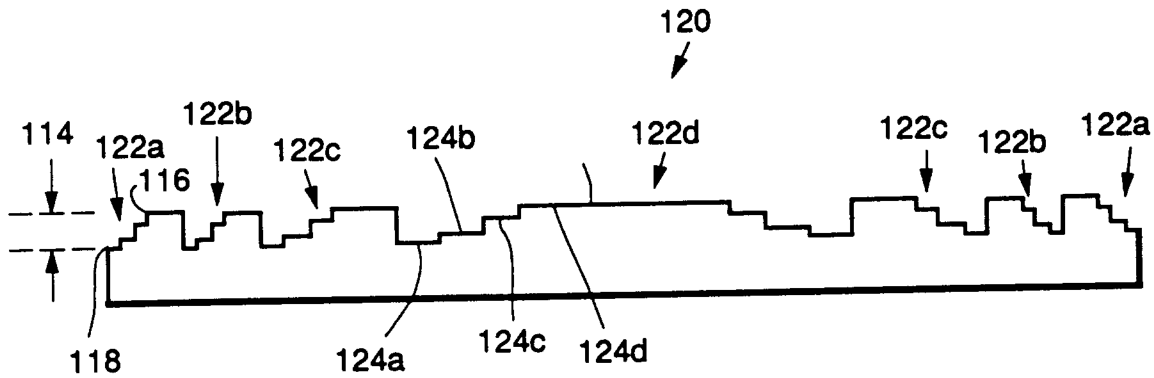


FIG. 6b.

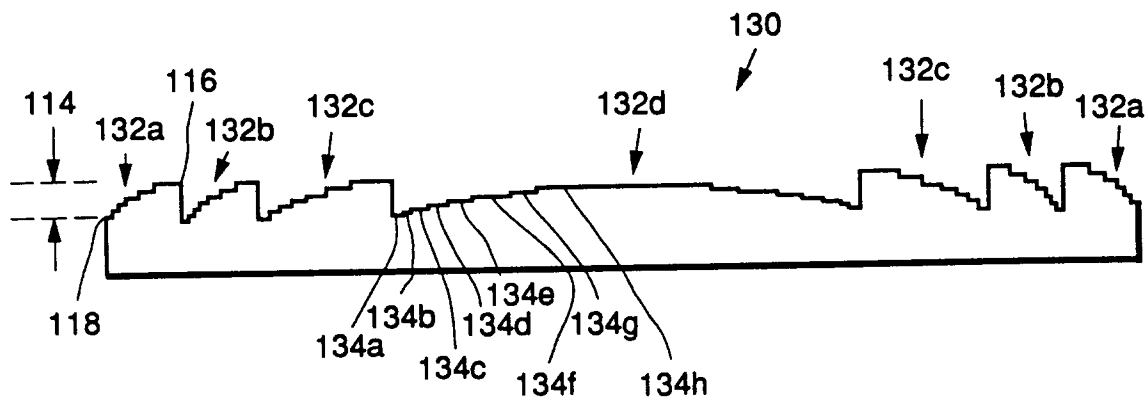


FIG. 6c.

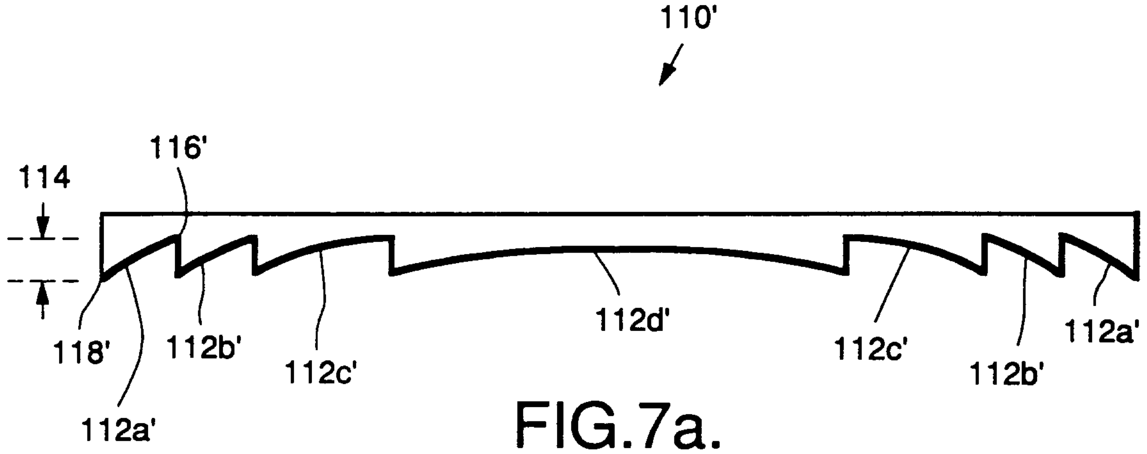


FIG.7a.

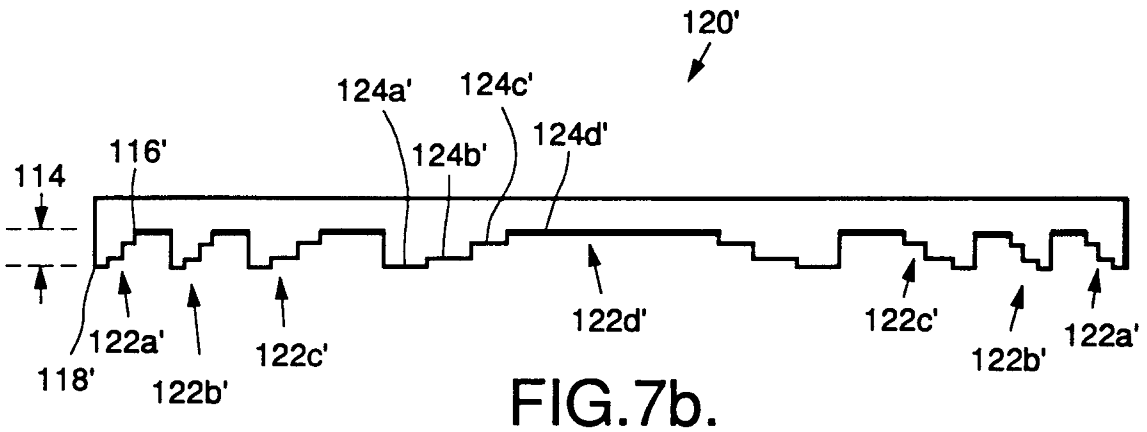


FIG.7b.

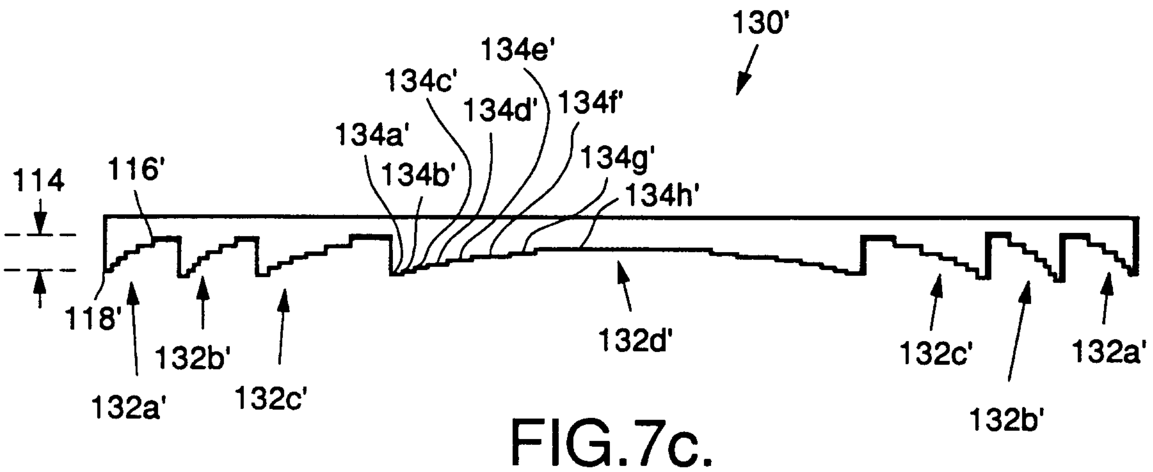


FIG.7c.

European Patent Office

# EUROPEAN SEARCH REPORT

Application Number

EP 92 11 9576

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5 ) |
|---|---|---|---|
| X | EP-A-0 441 206 (HUGHES AIRCRAFT)<br><br>* claims; figures *<br>--- | 1,5,6,7,<br>8,9 | G02B13/14<br>G02B127/00<br>G02B27/00<br>G02B5/18 |
| X | EP-A-0 461 856 (BRITISH AEROSPACE)<br>* claims; figures *<br>--- | 1 | |
| A | WO-A-9 112 551 (MIT)<br>* claims; figures *<br>--- | 1 | |
| A,P | US-A-5 153 778 (J.M.SASIAN ALVARARADO)<br>* claims; figures *<br>--- | 1 | |
| A | vol. 28, no. 6, June 1989,<br>pages 605 - 608 , XP000026301<br>G.SWANSON 'diffractive optical elements for use in infrared systems'<br>----- | 1 | |
| | | | TECHNICAL FIELDS SEARCHED (Int. Cl.5 ) |
| | | | G02B |

The present search report has been drawn up for all claims

| Place of search | Date of completion of the search | Examiner |
|---|---|---|
| THE HAGUE | 25 FEBRUARY 1993 | PFAHLER R. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document